**Europäisches Patentamt**

**European Patent Office**

**Office européen des brevets**

(19)

(11) Veröffentlichungsnummer: **0 036 467**
**B1**

(12) # EUROPÄISCHE PATENTSCHRIFT

(45) Veröffentlichungstag der Patentschrift:
**18.05.83**

(21) Anmeldenummer: **81100266.6**

(22) Anmeldetag: **15.01.81**

(51) Int. Cl.³: **B 60 J 3/02**

(54) **Sonnenblende, insbesondere für Fahrzeuge.**

(30) Priorität: **26.03.80 DE 3011639**

(43) Veröffentlichungstag der Anmeldung:
**30.09.81 Patentblatt 81/39**

(45) Bekanntmachung des Hinweises auf die Patenterteilung:
**18.05.83 Patentblatt 83/20**

(84) Benannte Vertragsstaaten:
**DE FR GB IT SE**

(56) Entgegenhaltungen:
**DE-A-2 737 215**
**DE-U-1 762 383**
**DE-U-7 633 038**
**DE-U-8 008 324**

(73) Patentinhaber: **Gebr. Happich GmbH,**
**Postfach 10 02 49 Clausenbrücke 1,**
**D-5600 Wuppertal 1 (DE)**

(72) Erfinder: **Viertel, Lothar, V. Gartenreihe 48,**
**D-6630 Saarlouis (DE)**

(74) Vertreter: **Rehders, Jochen, c/o Fa. Gebr. Happich**
**GmbH Postfach 10 02 49 Clausenbrücke 1,**
**D-5600 Wuppertal 1 (DE)**

Sonnenblende, insbesondere für Fahrzeuge

Die Erfindung bezieht sich auf eine Sonnenblende, insbesondere für Fahrzeuge, mit einem zwischen zwei Lagerböckchen klappbar gelagerten Sonnenblendenkörper aus weichelastischem Kunststoffmaterial, der durch eine Drahteinlage ausgesteift ist, die in aus dem Sonnenblendenkörper heraustretenden und in die Lagerböckchen eingreifende Lagerzapfen endet, wobei zumindest ein Lagerzapfen eine abgewinkelte Form aufweist.

Die bei dieser aus der DE-U-7 633 038 bekannten Sonnenblende verwendete durch Lagerreibung bewirkte Lagerfixierung erfolgt durch je zwei seitliche Lagerschellen, die leicht aussermittig angeordnet sind, um während der Drehbewegung eine Exzenterwirkung zu erzeugen, wodurch die Reibung erhöht wird. Die Anordnung von insgesamt vier Lagerschellen ist jedoch sehr aufwendig.

Bei einer weiteren bekannten Sonnenblende (DE-U-1 762 383) ist der Sonnenblendenkörper zwischen zwei Lagerböckchen klappbar angeordnet. Die Lagerböckchen weisen jeweils einen Lagerzapfen auf. Jeder Lagerzapfen greift in eine innerhalb des Sonnenblendenkörpers sitzende und fest mit der Drahteinlage verbundene Drehlagerschelle ein. Über eine die Schenkel der Drehlagerschelle durchsetzende Stellschraube kann das gewünschte Drehmoment eingestellt werden. Bei dieser bekannten Sonnenblende hat sich der vielteilige Aufbau als nachteilig erwiesen. So müssen Drehlagerschellen in Links- und Rechtsausführung hergestellt und in relativ arbeitsintensiver Weise schweissgemäss mit der Drahteinlage verbunden werden. Weiterhin muss jede Drehlagerschelle mit einer Stellschraube und Federmutter bestückt und exakt eingestellt werden, was ebenfalls recht aufwendig ist.

Nicht zuletzt besitzen auch die Lagerböckchen eine relativ komplizierte Ausbildung.

Der Erfindung liegt demgegenüber die Aufgabe zugrunde, eine Sonnenblende der eingangs genannten Art zu schaffen, die aus nur wenigen und zudem einfach gestalteten Teilen besteht und die besonders preisgünstig sein soll.

Der Erfindung zufolge wird diese Aufgabe dadurch gelöst, dass die Drahteinlage mit aus dem Sonnenblendenkörper heraustretenden und in die Lagerböckchen eingreifenden Lagerzapfen ausgebildet ist, von denen zumindest einer eine abgewinkelte Form aufweist und mit einem Winkelschenkel unter Vorspannung an der Stirnfläche des zugehörigen Lagerböckchens anliegt.

Der besondere Vorteil der Erfindung besteht in der Einsparung der bisher erforderlichen Einzelteile und in der sinnvollen Ausnutzung der ohnehin benötigten Drahteinlage für die Bildung der Lagerzapfen. Ferner macht sich die Erfindung die der Drahteinlage innewohnende Federelastizität zunutze, um eine Anpresskraft gegen die Lagerböckchen zu erzeugen, damit der Sonnenblendenkörper in der jeweils gewünschten Klapplage gehalten wird.

Die Drahteinlage weist vorzugsweise eine im wesentlichen U-förmige Ausbildung auf und die freien Endbereiche ihrer Seitenschenkel sind zwecks Bildung der Lagerzapfen jeweils nach aussen abgewinkelt. Hierdurch ergibt sich der Vorteil einer sehr einfachen Drahtführung unter Beachtung einer ausreichenden Aussteifung des Sonnenblendenkörpers; denn der Scheitelschenkel der Drahteinlage kann ohne weiteres in dem Bereich des Sonnenblendenkörpers angeordnet werden, der üblicherweise beim Klappen desselben ergriffen wird.

Eine zweckmässige Ausgestaltung der Erfindung besteht in einer die Seitenschenkel der Drahteinlage miteinander verbindenden Versteifungsstrebe, die vorzugsweise im Abstand vom Scheitelschenkel angeordnet ist und sich etwa parallel zu diesem erstreckt. Damit ergibt sich zum einen die Möglichkeit, einen relativ dünnen Draht einzusetzen und zum andern wird ein kürzerer Federarm für die sich jeweils gegen die Stirnflächen der Lagerböckchen abstützenden Seitenschenkel der Drahteinlage erzielt.

Eine bevorzugte Weiterbildung der Erfindung sieht vor, dass die Drahteinlage aus einem gebogenen Stahldrahtabschnitt besteht, dessen aus dem Sonnenblendenkörper herausragenden Bereiche mit einer Ummantelung versehen sind. Durch die Ummantelung sind die aus dem Sonnenblendenkörper herausragenden Bereiche korrosionsgeschützt, so dass ein unbehandelter preisgünstiger Draht verwendet werden kann.

Die Ummantelung kann vorteilhafterweise jeweils aus einem einen Lagerzapfen sowie bereichsweise den sich daran anschliessenden Seitenschenkel der Drahteinlage umschliessenden Kunststoffkörper bestehen. Hierdurch kann das sonst erforderliche Entgraten der Drahtabschnitte entfallen und etwaige Rappelgeräusche im Lagerbereich werden zuverlässig vermieden.

Zweckmässigerweise ist der Kunststoffkörper als Spritzgussteil ausgebildet, das aus zwei aufeinanderklappbaren, über angeformte Klipselemente aneinander festlegbaren und über ein Filmscharnier einstückig miteinander verbundenen Winkelhälften besteht. Ein solches Spritzgussteil ist kostengünstig herzustellen und kann schnell und einfach um die freien Endbereiche der Drahteinlage geklappt und durch Zusammendrücken der Klipselemente daran festgelegt werden.

Eine weitere vorteilhafte Ausgestaltung der Erfindung besteht in einer im Kunststoffkörper angeordneten, zum Einrasten eines Materialvorsprunges des Lagerböckchens bestimmten Ringnut. Auf diese Weise lässt sich die Sonnenblende mit Lagerböckchen zu einer Verkaufseinheit komplettieren, wobei die Lagerböckchen verliersicher gehalten sind.

Um den Sonnenblendenkörper in jeder Klapplage betriebssicher zu halten, sieht eine zweckmässige Weiterbildung der Erfindung vor, dass zumindest ein Lagerböckchen an der einen Winkelschenkel abstützenden Stirnfläche eine Auflaufschräge aufweist. Die Auflaufschräge ist so ausgebildet, dass der Winkelschenkel darauf unter Vergrösserung seiner Vorspannung aufläuft, wenn der Sonnenblendenkörper aus seiner Nichtgebrauchslage in eine einen Blendschutz ergebende Gebrauchslage geklappt wird. In dem Bestreben, die Lagerböckchen möglichst unkompliziert und einfach zu gestalten, kann es von Vorteil sein, dass die Auflaufschräge durch eine verdrehfest mit dem Lagerböckchen verbundene konische Scheibe gebildet ist. Diese Scheibe kann aus Kunststoff bestehen und mit Steckzapfen ausgebildet sein, die in entsprechende Öffnungen des Lagerböckchens einsteckbar sind.

Zusätzlich oder alternativ zu der Auflaufschräge kann vorgesehen sein, dass zumindest ein Lagerböckchen an der einen Winkelschenkel abstützenden Stirnfläche zumindest eine radial verlaufende Rastausnehmung aufweist. Die Rastausnehmung kann beispielsweise so angeordnet sein, dass der Sonnenblendenkörper in seiner hochgeklappten Nichtgebrauchslage gesichert ist.

In ästhetischer Hinsicht ist es von Vorteil, wenn nach einer weiteren Massnahme der Erfindung die obere Randkante des Sonnenblendenkörpers an den Eckbereichen jeweils eine etwa den Abmessungen des Lagerböckchens entsprechende stufenförmige Absetzung aufweist.

Ein Ausführungsbeispiel einer Sonnenblende nach der Erfindung wird anhand der Zeichnung näher erläutert.
Es zeigen

Fig. 1 eine komplette Sonnenblende in Ansicht, wobei der Sonnenblendenkörper strichpunktiert und eines der Lagerböckchen im Vertikalschnitt dargestellt ist,
Fig. 2 einen Lagerbereich der Sonnenblende nach Fig. 1 in Explosivdarstellung,
Fig. 3 den Schnitt gemäss der Linie III–III in Fig. 2,
Fig. 4 eine Einzelheit der Sonnenblende und
Fig. 5 einen Schnitt gemäss der Linie V–V in Fig. 4.

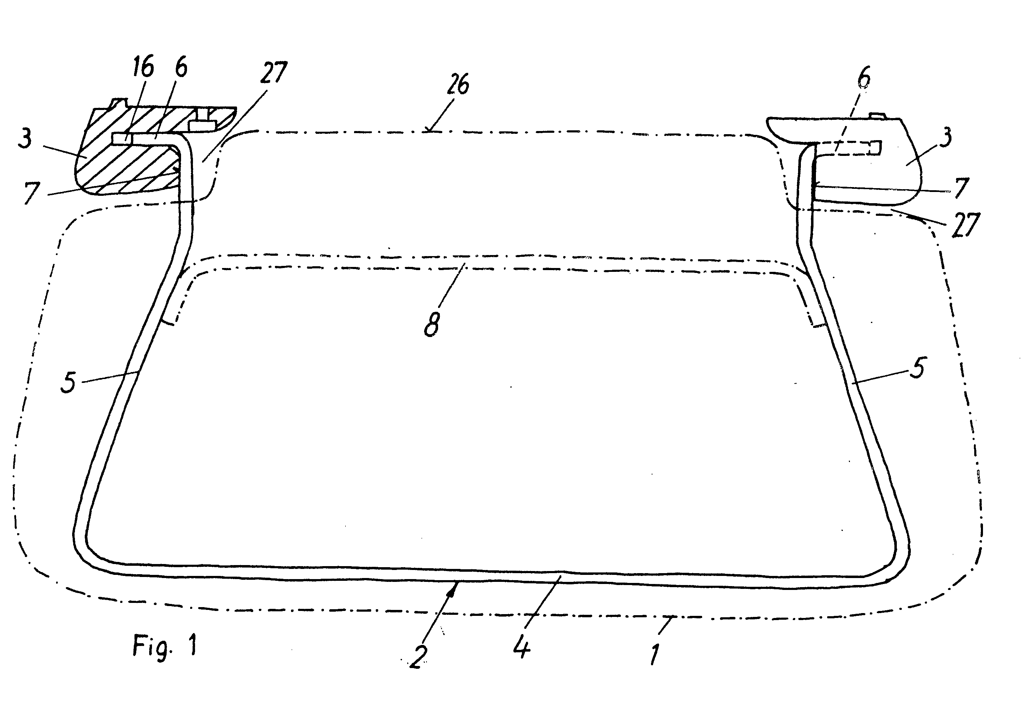

Die Sonnenblende nach Fig. 1 besteht aus einem lediglich strichpunktiert dargestellten Sonnenblendenkörper 1, in dem eine Drahteinlage 2 eingelagert ist. Der Sonnenblendenkörper 1 ist zwischen zwei Lagerböckchen 3 klappbar gelagert, die ihrerseits in einem Fahrzeug oberhalb der Frontscheibe an der Fahrzeugkarosserie zu befestigen sind.

Die Drahteinlage 2 ist im wesentlichen U-förmig ausgebildet und besitzt einen Scheitelschenkel 4 sowie zwei Seitenschenkel 5. Die freien Endbereiche der Seitenschenkel 5 sind abgewinkelt und bilden in die Lagerböckchen 3 eingreifende Lagerzapfen 6. Die sich unmittelbar an die Lagerzapfen 6 anschliessenden Bereiche der Seitenschenkel 5 liegen, wenn die Lagerböckchen im Fahrzeug montiert sind, unter Vorspannung an den ihnen benachbarten Stirnflächen 7 der Lagerböckchen 3 an. Aufgrund der sich dadurch ergebenden Reibungskraft wird der Sonnenblendenkörper 1 in jeder Klappstellung gehalten. Die Drahteinlage 2 kann mit einer, in Fig. 1 strichpunktiert angedeuteten, die Seitenschenkel 5 miteinander verbindenden Versteifungsstrebe 8 ausgebildet sein, die, wie die Drahteinlage 2, ebenfalls aus einem Drahtabschnitt bestehen kann.

Zweckmässigerweise ist die Drahteinlage 2 ein- oder beidseitig mit einer nicht dargestellten Abdeckung aus Pappe od. dgl. versehen und hierauf die weichelastische Polsterschicht aufgebracht, die aus ggf. mit einer Hüllfolie umgebenem Schaumkunststoff bestehen kann.

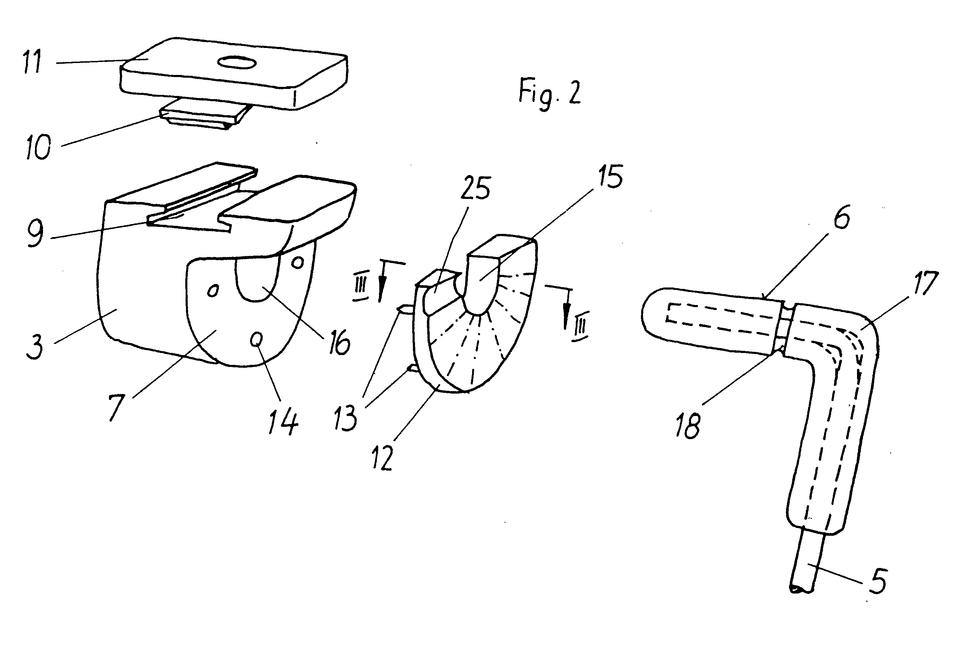

Fig. 2 zeigt einen Lagerbereich der Sonnenblende nach Fig. 1 in vergrössertem Massstab. Dabei ist zunächst zu erkennen, dass das Lagerböckchen 3 über eine Schwalbenschwanzführung 9 mit einem eine entsprechende Gegenführung 10 aufweisenden Lagersockel 11 zusammensetzbar ist. Die Führungen 9, 10 sind so ausgebildet, dass das Lagerböckchen 3 vom Lagersockel 11 abrutschen kann, wenn gegen den Sonnenblendenkörper 1 eine Stosskraft ausgeübt wird, was unter Umständen bei einem Unfall geschehen kann, wenn ein Fahrzeuginsasse mit dem Kopf gegen den sich in einer ungünstigen Klapplage befindlichen Sonnenblendenkörper 1 stösst. Insoweit wird also die Sonnenblende in erhöhtem Masse den Sicherheitsanforderungen gerecht.

Fig. 2 zeigt weiter eine konische Scheibe 12, die gegen die Stirnfläche 7 der Lagerböckchens 3 setzbar und an dem Lagerböckchen 3 verankerbar ist. Für die Verankerung weist die konische Scheibe 12 Lageransätze 13 und das Lagerböckchen 3 von der Stirnfläche 7 ausgehende Lagerausnehmungen 14 auf. Die konische Scheibe 12 besitzt eine Lagerführung 15 an ihrem oberen Randbereich, die mit der Lagerbohrung 16, die zur Aufnahme des Lagerzapfens 6 bestimmt ist, fluchtet. Die Frontseite der konischen Scheibe 12 steigt in ihrer Fläche, ausgehend von der hochgeklappten Nichtgebrauchslage des Sonnenblendenkörpers 1, in die heruntergeklappte, einen Blendschutz bietende Gebrauchslage kontinuierlich an. Beim Herunterklappen des Sonnenblendenkörpers 1 laufen die an der konischen Scheibe 12 anliegenden Bereiche der Seitenschenkel 5 der Drahteinlage 2 auf die Schrägflächen auf, so dass der Abstand der Seitenschenkel 5 voneinander verringert und die Reibung an den Stirnflächen der Lagerböckchen bzw. der konischen Scheiben vergrössert wird. Alternativ oder zusätzlich kann die konische Scheibe 12 mit radial verlaufenden Rastausnehmungen ausgebildet sein, über die die Seitenschenkel 5 bei der Klappbewegung des Sonnenblendenkörpers 1 ratschenartig bewegt und eingerastet werden können. In Fig. 2 ist mit ausgezogener Linie eine den Sonnenblendenkörper 1 in seiner hochgeklappten Nichtgebrauchslage sichernde Rastausnehmung 25 dargestellt und weitere Rastausnehmungen 25 sind durch strichpunktierte Linien angedeutet.

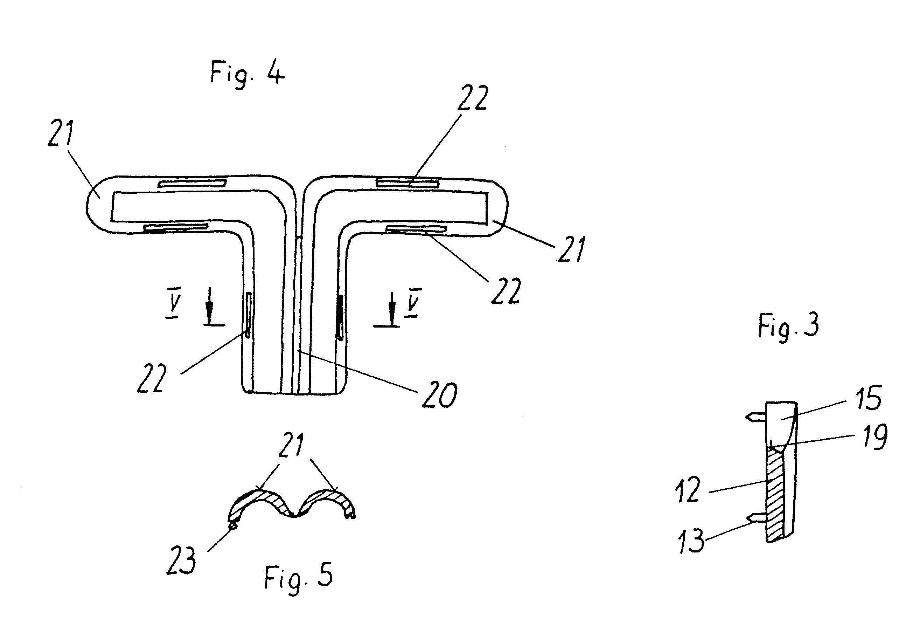

In Fig. 2 ist schliesslich noch ein Lagerzapfen 6 mit dem sich daran unmittelbar anschliessenden Bereich des Seitenschenkels 5 dargestellt. Dabei sind Lagerzapfen 6 und der Endbereich des Seitenschenkels 5 mit einer Ummantelung versehen, die aus einem Kunststoffkörper 17 besteht. Der Kunststoffkörper 17 besitzt im Bereich des Lagerzapfens 6 eine umlaufende Ringnut 18. Diese dient zur Aufnahme eines Materialvorsprunges 19, der am Lagerböckchen 3 bzw. an der konischen Scheibe 12 angeformt und in Fig. 3 dargestellt ist. Hierdurch ist das Lagerböckchen 3 nach dem Aufstecken auf den Lagerzapfen 6 verliersicher an diesem festgelegt.

Die Ausbildung des Kunststoffkörpers 17 ergibt sich im einzelnen aus Fig. 4 und 5. Er ist zweckmässigerweise als Spritzgussteil ausgebildet und weist im Fertigungszustand eine T-förmige Gestaltung auf. Der senkrechte T-Schenkel besitzt eine mittig durchlaufende Materialschwächung, die ein Filmscharnier 20 bildet. Hierdurch sind zwei gelenkig miteinander verbundene, im Querschnitt halbrund ausgebildete Winkelhälften 21 geschaffen, die sich schnell und einfach um die lagerseitigen Endbereiche der Drahteinlage 2 herumklappen lassen. Die Winkelhälften 21 sind aneinander festlegbar, und zwar über angeformte Klipselemente 22, die nach Fig. 5 jeweils aus einem sich nach aussen im Querschnitt vergrössernden Ansatz 23 an der einen Winkelhälfte 21 und einer diesen aufnehmenden hinterschnittenen Nut 24 in der anderen Winkelhälfte 21 bestehen können.

Der Sonnenblendenkörper 1 weist an den Ecken seiner oberen Randkante 26 stufenförmige Absetzungen 27 auf, in die die Lagerböckchen 3 eingreifen.

## Patentansprüche

1. Sonnenblende, insbesondere für Fahrzeuge, mit einem zwischen zwei Lagerböckchen (3) klappbar gelagerten Sonnenblendenkörper (1) aus weichelastischem Polstermaterial, der durch eine Drahteinlage (2) ausgesteift ist, die in aus dem Sonnenblendenkörper (1) heraustretenden und in die Lagerböckchen (3) eingreifende Lagerzapfen (6) endet, wobei zumindest ein Lagerzapfen eine abgewinkelte Form aufweist, dadurch gekennzeichnet, dass die Lagerzapfen (6) in Schwenkachsrichtung nach aussen abstehen und mindestens ein an den Lagerzapfen anschliessender Winkelschenkel (5) unter Vorspannung an der Stirnfläche (7) des zugehörigen Lagerböckchens (3) anliegt.

2. Sonnenblende nach Patentanspruch 1, dadurch gekennzeichnet, dass die Drahteinlage (2) eine im wesentlichen U-förmige Ausbildung aufweist, und dass die freien Endbereiche ihrer Seitenschenkel (5) zwecks Bildung der Lagerzapfen (6) jeweils nach aussen abgewinkelt sind.

3. Sonnenblende nach Patentanspruch 1 oder 2, gekennzeichnet durch eine die Seitenschenkel (5) der Drahteinlage (2) miteinander verbindende Versteifungsstrebe (8).

4. Sonnenblende nach Patentanspruch 3, dadurch gekennzeichnet, dass die Versteifungsstrebe (8) im Abstand vom Scheitelschenkel (4) der Drahteinlage (2) angeordnet ist und sich etwa parallel zu diesem erstreckt.

5. Sonnenblende nach einem oder mehreren der Patentansprüche 1 bis 4, dadurch gekennzeichnet, dass die Drahteinlage (2) aus einem gebogenen Stahldrahtabschnitt besteht, dessen aus dem Sonnenblendenkörper (1) herausragende Bereiche mit einer Ummantelung versehen sind.

6. Sonnenblende nach Patentanspruch 5, dadurch gekennzeichnet, dass die Ummantelung jeweils aus einem einen Lagerzapfen (6) sowie bereichsweise den sich daran anschliessenden Seitenschenkel (5) der Drahteinlage (2) umschliessenden Kunststoffkörper (17) besteht.

7. Sonnenblende nach Patentanspruch 6, dadurch gekennzeichnet, dass der Kunststoffkörper (17) als Spritzgussteil ausgebildet ist, das aus zwei aufeinanderklappbaren, über angeformte Klipselemente (22) aneinander festlegbaren und über ein Filmscharnier (20) einstückig miteinander verbundenen Winkelhälften (21) besteht.

8. Sonnenblende nach einem oder mehreren der vorangegangenen Patentansprüche, gekennzeichnet durch eine im Kunststoffkörper (17) angeordnete, zum Einrasten eines Materialvorsprunges (19) des Lagerböckchens (3) bestimmte Ringnut (18).

9. Sonnenblende nach einem oder mehreren der vorangegangenen Patentansprüche, dadurch gekennzeichnet, dass zumindest ein Lagerböckchen (3) an der einen Winkelschenkel (5) abstützenden Stirnfläche (7) eine Auflaufschräge aufweist.

10. Sonnenblende nach Patentanspruch 9, dadurch gekennzeichnet, dass die Auflaufschräge durch eine verdrehfest mit dem Lagerböckchen (3) verbundene konische Scheibe (12) gebildet ist.

11. Sonnenblende nach einem oder mehreren der vorangegangenen Patentansprüche, dadurch gekennzeichnet, dass zumindest ein Lagerböckchen (3) an der einen Winkelschenkel (5) abstützenden Stirnseite zumindest eine radial verlaufende Rastausnehmung (25) aufweist.

12. Sonnenblende nach einem oder mehreren der vorangegangenen Patentansprüche, dadurch gekennzeichnet, dass die obere Randkante (26) des Sonnenblendenkörpers (1) an den Eckbereichen jeweils eine etwa den Abmessungen des Lagerböckchens (3) entsprechende stufenförmige Absetzung (27) aufweist.

## Claims

1. A sun visor, particularly for a vehicle, the visor comprising a visor body (1) of a softly resilient padding material, the body being tiltably mounted between two bearing blocks (3) and being reinforced by a wire insert (2) terminating in journal pins (6) which protrude from the visor body (1), engage a respective one of the bearing blocks (3) and at least one of which is angularly bent, characterized in that the journal pins (6) project outwardly in the direction of the tilt axis, and in that at least one angle leg (5), which forms a continuation of the corresponding journal pin (6), is biassed so as to abut against an end face (7) of the respective bearing block (3).

2. A sun visor according to claim 1, characterized in that the wire insert (2) is of substantially U-shaped configuration, and in that the free end portions of both legs (5) are bent angularly outwardly so as to form the journal pins (6).

3. A sun visor according to claim 1 or 2, characterized by a bracing member (8) interconnecting the angle legs (5) of the wire insert (2).

4. A sun visor according to claim 3, characterized in that the bracing member (8) is spaced from and extends substantially parallel with the base (4) of the wire insert (2).

5. A sun visor according to any one or more of the claims 1 to 4, characterized in that the wire insert (2) is a cut and bent length of steel wire, and in that the portions thereof protruding from the visor body (1) are each provided with a casing.

6. A sun visor according to claim 5, characterized in that each casing is a plastics body (17) enclosing a respective one of the journal pins (6) and the portion of the wire insert's (2) angle leg (5) which is the continuation thereof.

7. A sun visor according to claim 6, characterized in that the plastics body (17) is an injection-moulded component which consists of two angle halves (21) integrally connected to one another by a thickness-reduced section (20), arranged to be folded one upon the other and to be secured to each other by means of integrally formed interengaging clip-in elements (22)

8. A sun visor according to any one or more of the preceding claims, characterized by an angular groove (18) provided in the plastics body (17) and serving to lockingly engage a projection (19) of the bearing block (3).

9. A sun visor according to any one or more of the preceding claims, characterized in that the end face (7) of at least one of the bearing blocks (3) supporting a respective one of the angle legs (5) is slanted.

10. A sun visor according to claim 9, characterized in that the slant is provided by a tapered disc secured fast against rotation to the respective bearing block (3).

11. A sun visor according to any one or more of the preceding claims, characterized in that at least one of the bearing blocks (3) is provided at its end supporting a respective one of the angle legs (5) with at least one radially extending catch recess (25).

12. A sun visor according to any one or more of the preceding claims, characterized in that the upper edge (26) of the visor body (1) is recessed at each of its corner regions, each recess (27) having the shape of a step substantially corresponding to the dimensions of the respective bearing block (3).

**Revendications**

1. Pare-soleil, en particulier pour véhicules, comprenant un corps (1) en matière synthétique et molle monté entre deux petits paliers (3) de façon à pouvoir être rabattu, rendu rigide par une garniture en fil métallique (2) qui se termine en pivots de palier (6) sortant du corps (1) du pare-soleil et pénétrant dans les petits paliers (3), l'un au moins des pivots de palier ayant une forme angulaire, carcatérisé en ce que les pivots de palier sont orientés vers l'extérieur dans le sens de l'axe de pivotement et en ce qu'au moins une branche angulaire (5) se raccordant au pivot de palier correspondant s'applique sous une précontrainte contre la face frontale (7) du petit palier (3) associé.

2. Pare-soleil la revendication 1, caractérisé en ce que la garniture en fil métallique (2) a une forme sensiblement en U et en ce que les parties terminales libres de ses branches latérales (5) sont respectivement repliées vers l'extérieur en vue de former les pivots de palier (6).

3. Pare-soleil selon la revendication 1 ou 2, caractérisé par une entretoise de raidissement (8) reliant l'une à l'autre les branches latérales (5) du fil encastré (2).

4. Pare-soleil selon la revendication 3, caractérisé en ce que l'entretoise de raidissement (8) est disposée à une certaine distance de la branche centrale (4) de la garniture (2) et s'étend sensiblement parallèlement à celle-ci.

5. Pare-soleil selon l'une ou plusieurs des revendications 1 à 4, caractérisé en ce que le fil encastré (2) est constitué par une section de fil d'acier repliée, dont les parties qui font saillie du corps (1) du pare-soleil sont munies d'un enrobage.

6. Pare-soleil selon la revendication 5, caractérisé en ce que l'enrobage est constitué respectivement par un corps en matière synthétique (17) qui entoure le pivot de palier (6) et partiellement la branche latérale (5) de la garniture (2) qui se raccorde à celui-ci.

7. Pare-soleil selon la revendication 6, caractérisé en ce que le corps en matière synthétique (17) est constitué sous forme d'une pièce moulée par injection, comprenant deux moitiés angulaires (21) rabattables l'une sur l'autre, pouvant être fixées l'une sur l'autre par des éléments d'agrafage (22) de forme appropriée et reliées l'une à l'autre en une seule pièce par l'intermédiaire d'une charnière en film (20).

8. Pare-soleil selon l'une ou plusieurs des revendications précédentes, caractérisé par une gorge annulaire (18) formée dans le corps en matière synthétique (1) et prévue pour l'enclenchement d'une saillie (19) du petit palier (3).

9. Pare-soleil selon l'une ou plusieurs des revendications précédentes, caractérisé en ce qu'au moins un petit palier (3) comprend une partie oblique montante dont la surface frontale (7) supporte une branche angulaire (5).

10. Pare-soleil selon la revendication 9, caractérisé en ce que la partie oblique montante est constituée par un disque conique rendu solidaire en rotation du petit palier (3).

11. Pare-soleil selon l'une ou plusieurs des revendications précédentes, caractérisé en ce qu'au moins un petit palier (3) comprend sur le côté frontal supportant une branche angulaire (5) au moins un évidement d'arrêt (25) orienté radialement.

12. Pare-soleil selon l'une ou plusieurs des revendications précédentes, caractérisé en ce que l'arrête (26) du bord supérieur du corps (1) du pare-soleil comprend dans ses zones respectives de coins un décrochement (27) en gradin correspondant approximativement aux dimensions du petit palier (3).

Fig. 1

0 036 467

Fig. 2

Fig. 3

Fig. 4

Fig. 5